# FASCICULE DE BREVET EUROPEEN

(11) **EP 1 228 302 B1**
(45) Date de publication et mention de la délivrance du brevet: **01.09.2004**
(21) Numéro de dépôt: 00990598.5
(22) Date de dépôt: 08.11.2000
(51) Int. Cl.: F02D 41/06

(54) **PROCEDE DE COMMANDE DU DEMARRAGE D'UN MOTEUR A COMBUSTION INTERNE ET A INJECTION DIRECTE**
VERFAHREN ZUR REGELUNG DES STARTS EINER BRENNKRAFTMASCHINE MIT DIREKTEINSPRITZUNG
CONTROL METHOD FOR STARTING A DIRECT INJECTION INTERNAL COMBUSTION ENGINE

(30) Priorité: 10.11.1999 FR 9914146
(43) Date de publication de la demande: 07.08.2002
(73) Titulaire: Siemens VDO Automotive S.A.S., 31036 Toulouse Cédex 01 (FR); Renault s.a.s., 92100 Boulogne Billancourt (FR)
(72) Inventeur: AUBOURG, Alain, F-31240 Saint Jean (FR); HAUET, Bertrand, F-78640 St. Germain de la Grange (FR); TARROUX, Francis, F-31320 Aureville (FR)
(74) Mandataire: Berg, Peter, Dipl.-Ing.
(86) Numéro de dépôt international: PCT/EP2000/011043
(87) Numéro de publication internationale: WO 2001/034961

(56) Documents cités:
- EP-A- 0 849 455
- EP-A- 0 919 710
- DE-A- 4 020 298
- DE-A- 19 539 885
- GB-A- 2 315 297
- US-A- 5 809 973

## Description

La présente invention est relative à un procédé de commande du démarrage d'un moteur à combustion interne, à injection directe d'un carburant d'alimentation délivré audit moteur par des moyens de mise en pression dudit carburant.

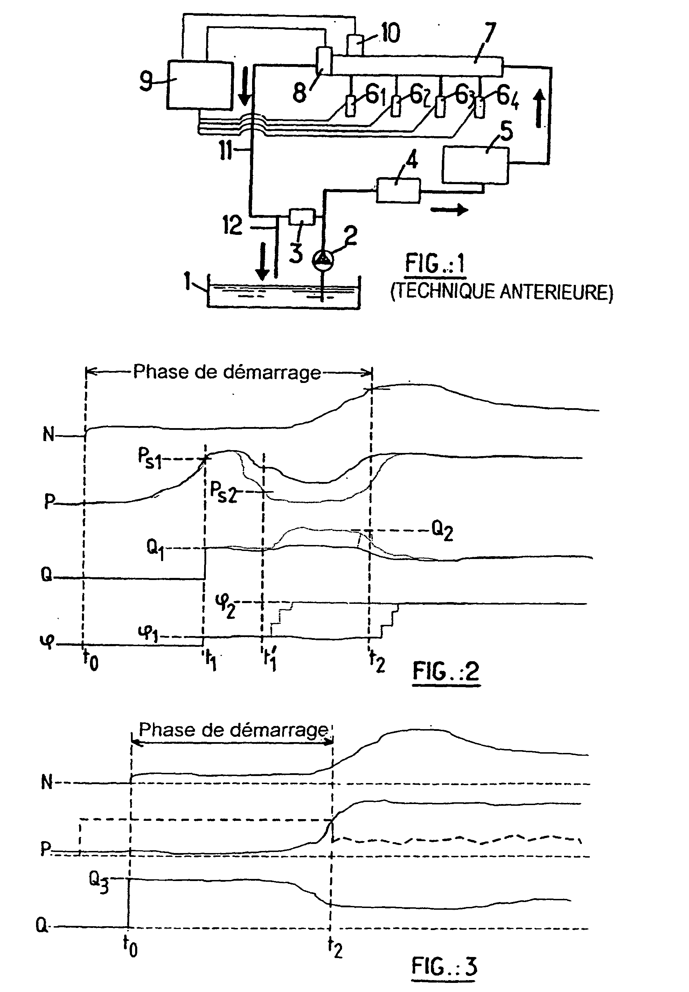

On a représenté à la figure 1 du dessin annexé un dispositif d'alimentation en carburant d'un moteur à combustion interne à injection directe, d'un type connu comprenant un réservoir 1 de carburant, une pompe électrique 2 alimentée par le réservoir 1 et associée à un régulateur de pression 3 pour délivrer du carburant à une deuxième pompe, à travers un filtre 4, le carburant délivré par la pompe 2 étant porté à un premier niveau de pression supérieur à la pression atmosphérique, mais relativement bas, d'ou le nom de "pompe basse pression" donné à la pompe 2. La deuxième pompe 5, entraînée mécaniquement par le moteur, relève encore la pression du carburant, jusqu'à un deuxième niveau, supérieur au premier, convenant à l'alimentation d'injecteurs de carburant 6₁, 6₂, 6₃, 6₄ montés sur une rampe 7 d'alimentation en carburant des cylindres du moteur à combustion interne à injection directe (non représenté).

La pression du carburant délivré par la pompe 5, dite "pompe haute pression", est fixée par un régulateur électromécanique 8, tel qu'une électrovanne commandée par un calculateur 9. Dans ce dernier cas, un capteur 10 délivre au calculateur 9 un signal représentatif de la pression P du carburant contenu dans la rampe 7, pour permettre au calculateur d'assurer la régulation de la pression du carburant dans cette rampe au niveau prédéterminé requis, de l'ordre de 50 à 100 bars. Le calculateur 9 est couramment constitué par le calculateur de gestion du fonctionnement du moteur, commandant entre autres les injecteurs 6ᵢ (i de 1 à 4 dans l'exemple représenté) et notamment les temps d'ouverture de ceux-ci.

Le carburant non débité par les injecteurs 6i est renvoyé au réservoir par un conduit 11,12, mis à la pression atmosphérique.

Suivant un procédé connu de démarrage d'un moteur à combustion interne à injection directe alimenté par le dispositif représenté à la figure 1, ce démarrage s'opère avec un carburant délivré aux injecteurs 6ᵢ du moteur à une pression relativement basse (4 à 5 bars), atteinte rapidement par la pompe basse pression, qui, commandée électriquement, peut être alimentée dès la mise sous tension (contact) du véhicule, avant le lancement du moteur.

Dans le cas d'un moteur à combustion interne à injection directe, cependant, un démarrage à basse pression de carburant oblige à recourir à un mélange air/carburant de richesse très supérieure à celle d'un mélange stoechiométrique, de l'ordre de 10 fois supérieure, la composition de ce mélange au niveau des bougies classiquement disposées dans les cylindres du moteur pour l'allumer n'étant pas optimale dans un moteur de ce type, conçu pour être normalement alimenté avec du carburant à haute pression, supérieure à 50 bars. Il en résulte des temps de démarrage du moteur trop longs, notamment dans des environnements à basse ou très basse température, et une quantité importante d'hydrocarbures imbrûlés dans les gaz d'échappement du moteur, pendant le démarrage de celui-ci.

La présente invention a précisément pour but de fournir un procédé de commande du démarrage d'un moteur à combustion interne à injection directe qui ne présente pas ces inconvénients et qui, en particulier, permette de raccourcir le temps de démarrage du moteur aux basses et très basses températures, tout en réduisant alors la production d'hydrocarbures imbrûlés.

On atteint ce but de l'invention, ainsi que d'autres qui apparaîtront à la lecture de la description qui va suivre, avec un procédé de commande du démarrage d'un moteur à combustion interne, à injection directe d'un carburant d'alimentation délivré audit moteur par des moyens de mise en pression dudit carburant, ce procédé étant remarquable en ce que, lors dudit démarrage, a) on surveille la température T du moteur et la pression P du carburant délivré par lesdits moyens de mise en pression, b) si T est inférieur à une température de seuil Tₛ prédéterminée, on établit un mode de démarrage du moteur avec un carburant à haute pression dès que la pression P devient supérieure à une pression de seuil Pₛ₁ prédéterminée, et c) on établit un mode de démarrage du moteur avec un carburant à basse pression si T > Tₛ.

Comme on le verra plus loin, en démarrant normalement ainsi le moteur avec du carburant à haute pression plutôt que, classiquement, à basse pression, on atteint les buts énoncés ci-dessus.

Suivant une autre caractéristique du procédé selon l'invention, en mode de démarrage avec un carburant à haute pression, si la pression de carburant reste supérieure à un seuil Pₛ₂ prédéterminé inférieur au seuil Pₛ₁, on calcule une quantité de carburant à injecter dans chaque cylindre du moteur, on en déduit une durée du temps d'ouverture de l'injecteur considéré, ainsi que l'instant d'ouverture de l'injecteur propre à permettre la fermeture dudit injecteur, en phase avec une position angulaire du vilebrequin du moteur avancée d'un angle prédéterminé sur celle de l'instant d'allumage du mélange air/carburant.

D'autres caractéristiques et avantages de la présente invention apparaîtront à la lecture de la description qui va suivre et à l'examen du dessin annexé dans lequel :
- la figure 1 est un schéma d'un dispositif d'alimentation en carburant d'un moteur à combustion interne à injection directe décrit en préambule de la présente description, et
- les figures 2 et 3 sont des ensembles de graphes illustrant des modes de démarrage de ce moteur à haute et basse pression, respectivement, du carburant d'alimentation du moteur.

A la figure 2 du dessin annexé, on a représenté des graphes illustrant, en phase du démarrage du moteur, l'évolution du régime N de ce moteur, de la pression P du carburant délivré au moteur, de la quantité Q de carburant injecté et du phasage ϕ de la fin d'injection du carburant, dans une situation de démarrage du moteur avec un carburant à haute pression, selon la présente invention.

Le calculateur 9 de gestion du fonctionnement du moteur est chargé de l'exécution de la stratégie de commande du démarrage de ce moteur suivant la présente invention. Il reçoit classiquement divers signaux nécessaires à la gestion du moteur et notamment le signal P délivré par le capteur 10 de pression du carburant (voir figure 1), un signal N représentatif du régime du moteur et un signal T représentatif de la température du moteur, normalement délivré par un capteur (non représenté) de la température de l'eau de refroidissement de ce moteur. Le calculateur 9 détermine par ailleurs les instants d'ouverture et de fermeture des injecteurs 6ᵢ pour régler les quantités de carburant injecté dans les cylindres du moteur ainsi que le phasage de ces injections de carburant et notamment celle ϕ de la fin de l'injection.

Le calculateur 9 est dûment programmé pour exécuter la stratégie de démarrage du moteur suivant la présente invention, que l'on décrira maintenant en liaison successivement avec les graphes des figures 2 et 3.

Comme représenté à la figure 2, à la mise en route du moteur à l'instant t₀, classiquement opérée par un démarreur électrique, le régime N du moteur passe à une valeur non nulle et la pression P du carburant commence à croître.

Suivant une caractéristique importante de la présente invention si, alors, la température T du moteur est inférieure à une température de seuil prédéterminée, par exemple Tₛ = 40° C, significative d'un "démarrage à froid" du moteur, le calculateur 9 exécute une stratégie de démarrage du moteur en mode dit à "haute" pression de carburant.

Suivant cette stratégie, dès que, à l'instant t₁ la pression P de carburant franchit un seuil prédéterminé Pₛ₁ tel que Pₛ₁ = 30 bars par exemple, garantissant une bonne qualité de pulvérisation de ce carburant dans les injecteurs 6ᵢ, l'injection de carburant dans le moteur commence, la quantité injectée étant fixée à un niveau Q₁ correspondant à une richesse relativement basse du mélange air/carburant (de l'ordre de 5 fois la richesse stoechiométrique à T = 20°, soit une richesse moitié de celle nécessaire en basse pression) comme il convient pour l'alimentation d'un moteur à combustion interne à injection directe de carburant à haute pression (normalement 50 bars ou plus).

Le calculateur 9 continue de surveiller les évolutions de la pression P de carburant après l'instant t₀. La stratégie appliquée à partir de l'instant t₁ reste inchangée même si cette pression retombe, comme représenté en trait plein, en dessous de la valeur de seuil Pₛ₁, pour autant cependant qu'elle ne descende pas en dessous d'un autre seuil prédéterminé Pₛ₂ (dans la partie du graphe en trait pointillé), fixé à 10 bars par exemple.

Si le seuil Pₛ₂ est franchi, le calculateur abandonne la stratégie de démarrage à haute pression du carburant décrite ci-dessus, la haute pression nécessaire ne pouvant être assurée, pendant la phase de démarrage considéré, par les moyens de mise en pression utilisés. Une telle situation peut découler, par exemple, d'une difficulté d'amorçage de la pompe haute pression ou d'une quantité d'essence à injecter supérieure au débit de la pompe haute pression.

Le calculateur 9 revient alors à une stratégie de démarrage en basse pression de carburant, qui implique un enrichissement du mélange air/carburant et donc un accroissement de la quantité Q de carburant injecté, de Q₁ à Q₂ (voir la partie du graphe en trait pointillé).

La stratégie décrite ci-dessus est spécifique à la phase de démarrage du moteur, de durée (t₂ - t₀). Après l'instant t₂, les quantités de carburant injectées et le phasage de l'injection de ces quantités sont réglés et commandés séquentiellement par des "cartographies" classiques, dont les grandeurs d'entrée sont, par exemple, la pression d'air admis dans le moteur et le régime de ce moteur.

Pendant la phase de démarrage (t₀, t₂), le phasage des injections de carburant est déterminé comme suit. Le calculateur détermine la quantité d'essence Q₁ à injecter et une durée tᵢ d'ouverture de l'injecteur correspondant. Le calculateur détermine ensuite les instants d'ouverture et de fermeture de l'injecteur de manière que la phase d'injection se termine avant l'excitation de la bougie d'allumage du mélange air/carburant.

On sait que l'instant de cet allumage est classiquement repéré, dans un cycle moteur correspondant à une rotation de 720° du vilebrequin associé au moteur (pour un moteur à quatre cylindres) par l'angle d'avance à l'allumage α, mesuré par rapport au passage au point mort haut du piston, à la fin du temps de compression du cylindre correspondant. Dans ce repère angulaire, on détermine l'instant t₁ de déclenchement de l'injection en fonction de la durée tᵢ d'ouverture de l'injecteur de telle sorte que l'instant de fermeture de celui-ci intervienne lorsque le vilebrequin atteint une position en avance d'un angle α + ϕ sur celle du point mort haut.

L'injection s'opérant, dans un moteur à combustion interne à injection directe, pendant les temps d'admission, et éventuellement, de compression du mélange air/carburant dans le cylindre considéré, on coupe l'injection, en démarrage à haute pression de carburant suivant l'invention, dans la phase de compression du mélange (ϕ = ϕ₁), les soupapes d'admission du cylindre étant alors fermées, et ceci aussi longtemps que la pression de carburant reste suffisante pour qu'il puisse être injecté dans le cylindre compte tenu de la pression croissante régnant dans celui-ci, soit aussi longtemps que la pression de carburant à injecter reste supérieure à 10 bars, par exemple.

En dessous de cette pression, on revient suivant l'invention à un mode de fonctionnement adapté à un carburant délivré à basse pression, comme illustré en trait interrompu sur les graphes de la figure 2, à partir de l'instant t'₁. L'injection de carburant s'arrête alors plus tôt (ϕ = ϕ2) pendant le temps d'admission du mélange air/carburant, celui-ci restant sensiblement alors à la pression atmosphérique, les soupapes étant ouvertes.

Comme représenté à la figure 2, le passage de la phase ϕ₁ à la phase ϕ₂ se fait par paliers intermédiaires, incrémentés régulièrement lors de pas successifs de la rotation du vilebrequin du moteur, de 50° par exemple, ceci pour éviter d'amplifier la chute de la pression du carburant.

Le démarrage d'un moteur à combustion interne à injection directe à haute pression de carburant permet d'assurer des combustions de bonne qualité grâce à la composition du mélange air/carburant au voisinage de la bougie que l'on peut obtenir avec un carburant à haute pression. Ces bonnes combustions permettent de raccourcir le temps de démarrage du moteur aux basses et très basses températures, en dessous d'une à deux secondes, par exemple. Elles permettent en outre de réduire la quantité d'hydrocarbures imbrûlés transportés par les gaz d'échappement et donc la pollution de l'environnement par ces gaz.

La demanderesse a observé que lors d'un démarrage à froid, dès les premiers tours du moteur, la pompe haute pression 5 peut fournir une pression de carburant suffisante pour assurer une pulvérisation convenable du carburant dans les cylindres du moteur, apportant les avantages précités.

Par contre, lors d'un démarrage à chaud (T > Tₛ), les exigences des cahiers des charges sont beaucoup plus sévères sur le temps de démarrage, en requérant en général que celui-ci ait lieu en moins d'une demi-seconde. Dans ce cas, les premiers tours requis pour la fourniture d'une haute pression de carburant convenable excèdent la durée autorisée. De plus, les risques de génération de vapeurs de carburant à l'entrée de la pompe haute pression sont susceptibles de retarder encore le démarrage.

La solution classiquement employée en injection indirecte, qui consiste à injecter simultanément en amont de chaque cylindre une quantité prédéterminée de carburant, s'avère inadaptée dans le cas d'un moteur à injection directe. En effet, l'injection de carburant s'effectuant directement dans le cylindre, sans bénéficier de la barrière des soupapes d'admission pour réaliser une distribution adéquate, les cylindres en phase de détente ou d'échappement rejettent ce carburant à l'échappement, en générant ainsi une pollution par hydrocarbures imbrûlés.

Selon l'invention, on choisit alors une stratégie de démarrage en basse pression dans laquelle, dès la mise sous tension (contact) du véhicule, on commande le régulateur électromécanique 8 (figure 1) et la pompe basse pression 2 de manière à établir dans le circuit de carburant une circulation de carburant sous la pression maximale autorisée par la pompe 2 et le régulateur de pression 3. Avantageusement, dans une variante du dispositif d'alimentation de la figure 1 dans laquelle le conduit 11 de retour du carburant en provenance de la rampe d'injecteurs est relié en amont du régulateur 3, il suffit de commander le régulateur électromécanique 8 à pleine ouverture. Cette commande est représentée par le trait interrompu du graphe P de la figure 3.

En parallèle, et dès la mise en rotation du moteur, à l'instant t₀, le calculateur 9 détermine une quantité Q₃ de carburant à injecter et la durée correspondante Tᵢ d'ouverture des injecteurs. Simultanément, on observe les signaux repérant la position angulaire du moteur, c'est-à-dire classiquement le signal d'un capteur repérant une singularité sur une cible reliée au vilebrequin et celui d'un capteur donnant la position de l'arbre à cames. Dès l'apparition d'un repère sur l'un quelconque de ces signaux, on peut estimer quel sera le prochain cylindre en phase d'admission, et l'instant d'ouverture de la soupape d'admission correspondante. En effet, il existe une relation mécanique par construction entre le vilebrequin et/ou l'arbre à cames et les soupapes. On commande alors l'injection dans ce cylindre à partir de l'ouverture de la soupape et pendant la durée tᵢ. L'injection de carburant est opérée séquentiellement, à soupape d'admission ouverte, dans les cylindres suivants, avec un décalage angulaire programmable (correspondant au nombre de cylindres du moteur) par rapport au repère considéré, pendant au moins un cycle moteur. Ce procédé permet, en observant la première occurrence du signal "arbre à cames" ou "vilebrequin", de réaliser une première injection avec une avance moyenne d'un demi-tour moteur (pour un moteur à quatre cylindres) par rapport aux méthodes de synchronisation classiques et donc de gagner environ une demi-seconde sur la durée de la phase de démarrage.

Un tel démarrage à chaud en basse pression de carburant est également plus rapide qu'un démarrage en haute pression, à chaud, car il permet de balayer d'éventuelles vapeurs de carburant présentes dans la pompe haute pression, qui perturberaient autrement le fonctionnement de cette pompe.

Le temps d'injection tᵢ est fonction de divers paramètres classiques : régime moteur N, pression d'air admis, température de l'eau de refroidissement, pression du carburant, et, suivant la présente invention, du mode de démarrage choisi : haute pression ou basse pression, la quantité de carburant à injecter étant avantageusement moindre en démarrage à haute pression.

Suivant l'invention, on sort de la phase de démarrage, à l'instant t₂ (voir figures 2 et 3) par une procédure commune à un démarrage en haute pression ou en basse pression. Cette sortie se fait ainsi sur le franchissement d'un seuil par le régime N, ou au bout d'un intervalle de temps prédéterminé.

Après la sortie de la phase de démarrage, le calculateur 9 utilise des cartographies classiques pour déterminer la quantité de carburant à injecter et les instants d'ouverture et de fermeture des injecteurs, ces cartographies ayant comme entrées, par exemple, la pression d'air admis dans le moteur et le régime N de ce moteur. La transition vers cette quantité de carburant Q cartographiée se fait par décrémentation progressive de la quantité calculée pour la phase de démarrage.

## Revendications

1. Procédé de commande du démarrage d'un moteur à combustion interne, à injection directe d'un carburant d'alimentation délivré audit moteur par des moyens de mise en pression (2,5) dudit carburant, suivant lequel lors dudit démarrage,
a) on surveille la température T du moteur et la pression (P) du carburant délivré par lesdits moyens de mise en pression,
b) si la température T est inférieur à une température de seuil Tₛ prédéterminée, on établit un mode de démarrage du moteur avec un carburant à haute pression dès que la pression (P) devient supérieure à une pression de seuil Pₛ₁ prédéterminée, et
c) on établit un mode de démarrage du moteur avec un carburant à basse pression si T > Tₛ,
**caractérisé en ce que**, en mode de démarrage avec un carburant à haute pression, si la pression de carburant reste supérieure à un seuil Pₛ₂ prédéterminé inférieur au seuil Pₛ₁, on calcule une quantité de carburant (Q₁) à injecter dans chaque cylindre du moteur et on en déduit une durée (tᵢ) du temps d'ouverture de l'injecteur considéré, ainsi que l'instant d'ouverture de l'injecteur (6ᵢ) propre à permettre la fermeture dudit injecteur (6ᵢ) à soupapes fermées, en phase avec une position angulaire du vilebrequin du moteur avancée d'un angle (ϕ₁) prédéterminé sur celle de l'instant d'allumage du mélange air/carburant.

2. Procédé conforme à la revendication 1, **caractérisé en ce que**, en mode de démarrage avec un carburant haute pression, si la pression (P) du carburant retombe en dessous d'un seuil Pₛ₂ prédéterminée inférieur au seul Pₛ₁, on revient à un démarrage du moteur avec un carburant à basse pression.

3. Procédé conforme à la revendication 2, **caractérisé en ce que**, au retour au démarrage du moteur avec un carburant à basse pression, on calcule une quantité (Q₂) de carburant à injecter à basse pression, on injecte séquentiellement ladite quantité dans les cylindres du moteur, la durée (tᵢ) de ladite injection et l'instant d'ouverture de chaque injecteur étant choisis de manière que la fermeture de l'injecteur intervienne à soupapes ouvertes, en phase avec une position angulaire du vilebrequin du moteur avancée d'un angle (ϕ₂) prédéterminé sur celle de l'instant d'allumage du mélange air/carburant.

4. Procédé conforme à la revendication 1, **caractérisé en ce que**, à l'étape c), on commande une injection séquentielle de carburant dans les cylindres du moteur, phasée sur l'ouverture de la soupape d'admission du premier cylindre.

## Patentansprüche

1. Verfahren zur Regelung oder Steuerung des Starts einer Brennkraftmaschine mit Direkteinspritzung eines Versorgungskraftstoffs, der dem Motor über Mittel zur Druckbeaufschlagung (2, 5) des Kraftstoffs geliefert wird, bei welchem während des Starts,
a) die Temperatur T des Motors und der Druck (P) des durch die Mittel zur Druckbeaufschlagung gelieferten Kraftstoffs überwacht wird,
b) wenn die Temperatur T kleiner als eine vorbestimmte Schwcllentemperatur Tₛ ist, wird ein Startmodus des Motors mit einem Kraftstoff auf hohem Druck von dem Moment an eingeleitet, an dem der Druck (P) größer wird als ein vorbestimmter Schwellendruck Pₛ₁, und
c) wenn T > Tₛ ist, wird eine Startmodus des Motors mit einem Kraftstoff auf niedrigem Druck eingeleitet,
**dadurch gekennzeichnet, dass** in dem Startmodus mit einem Kraftstoff auf hohem Druck, wenn der Druck des Kraftstoffs größer als ein vorbestimmter Schwellenwert Pₛ₂ bleibt, der kleiner ist als die Schwelle Pₛ₁, eine in jeden Zylinder des Motors einzuspritzende Kraftstoffmenge (Q₁) berechnet wird und eine Öffnungszeitdauer (tᵢ) der betrachteten Einspritzdüse abgeleitet wird, so dass der Öffnungszeitpunkt der Einspritzdüse (6ᵢ), der dazu geeignet ist, das Schließen der Einspritzdüse (6ᵢ) bei geschlossenen Ventilen zu erlauben, in Phase mit einer Winkelposition der Kurbelwelle des Motors ist, die um einen vorbestimmten Winkel (ϕ₁) vor dem Zündzeitpunkt des Luft-/Kraftstoffgemisches liegt.

2. Verfahren nach Anspruch 1, **dadurch gekennzeichnet, dass** man im Startmodus mit einem Kraftstoff auf hohem Druck zu einem Start des Motors mit einem Kraftstoff auf niedrigem Druck zurückkehrt, wenn der Druck (P) des Kraftstoffs unter eine vorbestimmte Schwelle Pₛ₂ fällt, die kleiner ist als die Schwelle Pₛ₁.

3. Verfahren nach Anspruch 2, **dadurch gekennzeichnet, dass** man bei der Rückkehr zum Start des Motors mit einem Kraftstoff auf niedrigem Druck eine Menge (Q₂) von auf niedrigem Druck einzuspritzendem Kraftstoff berechnet, diese Menge sequentiell in die Zylinder des Motors einspritzt, wobei die Dauer (tᵢ) der Einspritzung und der Öffnungszeitpunkt jeder Einspritzdüse derart gewählt ist, dass das Schließen der Einspritzdüsen bei offenen Ventilen in Phase mit einer Winkelposition der Kurbelwelle des Motors erfolgt, die um einen vorbestimmten Winkel (ϕ₂) vor der Position des Zündzeitpunkts des Luft-/Kraftstoffgemisches liegt.

4. Verfahren nach Anspruch 1, **dadurch gekennzeichnet, dass** in Schritt c) eine sequentielle Einspritzung des Kraftstoffs in die Zylinder des Motors gesteuert oder geregelt wird, die auf die Öffnung des Einlassventils des ersten Zylinders phasiert ist.

## Claims

1. A method for commanding the start of a direct-injection internal combustion engine, with a fuel delivered to said engine by means of pressurizing (2, 5) said fuel, following which, during the said start-up,
a) the temperature T of the engine and the pressure (P) of the fuel delivered by the said means of pressurization are monitored,
b) if the temperature T is below a predetermined threshold Tₛ, a method of starting the engine with high fuel pressure is established as soon as the pressure (P) goes above a predetermined pressure threshold Pₛ₁, and
c) a method of starting the engine with low fuel pressure is established if T > Tₛ,
**characterized in that**, in start-up mode with fuel at high pressure, if the fuel pressure remains above a predetermined threshold Pₛ₂, which is below the threshold Pₛ₁, a quantity of fuel (Q₁) to be injected into each engine cylinder is calculated and a duration (tᵢ) of opening of the injector in question is calculated, as well as the moment of opening of the injector (6ᵢ) in order to enable the closure of the said injector (6ᵢ) with closed valves, in phase with an angular position of the engine crankshaft, said angular position being advanced by a predetermined angle (ϕ₁) ahead of that at the moment of ignition of the air/fuel mix.

2. A method according to Claim 1, **characterized in that** in start-up mode with the fuel at high pressure, if the fuel pressure (P) falls below a predetermined threshold Pₛ₂ that is below the threshold Pₛ₁, it reverts to an engine start at low fuel pressure.

3. A method according to Claim 2, **characterized in that**, at the return of the engine to a start with low fuel pressure, a quantity (Q₂) of fuel to be injected at low pressure is calculated, the said quantity is injected sequentially into the engine cylinders, the duration (tᵢ) of the said injection and the moment of opening of each injector being chosen so that the closure of the injector occurs as the valves are open, in phase with an angular position of the engine crankshaft, said angular position being advanced by a predetermined angle (ϕ₂) ahead of that at the moment of ignition of the air/fuel mix.

4. A method according to Claim 1, **characterized in that**, at stage c), a sequential injection of fuel into the cylinders is commanded, phased with the opening of the inlet valve of the first cylinder.
